Europäisches Patentamt

**European Patent Office**

Office européen des brevets

(11) Publication number: **0 149 091**

**A1**

(12) # EUROPEAN PATENT APPLICATION

(21) Application number: **84114657.4**

(22) Date of filing: **03.12.84**

(51) Int. Cl.⁴: **C 08 L 69/00**

(30) Priority: **16.12.83 US 562376**

(43) Date of publication of application:
**24.07.85 Bulletin 85/30**

(84) Designated Contracting States:
**DE FR GB IT**

(71) Applicant: **MOBAY CHEMICAL CORPORATION**
**Mobay Road**
**Pittsburgh Pennsylvania 15205-9741(US)**

(72) Inventor: **Witman, Mark W.**
**1856 Taper Drive**
**Pittsburgh Pennsylvania 15249(US)**

(74) Representative: **Gremm, Joachim, Dr. et al,**
**Bayer AG c/o Zentralbereich Patente, Marken und**
**Lizenzen**
**D-5090 Leverkusen 1, Bayerwerk(DE)**

(54) **Impact modified polycarbonates.**

(57) The present invention is directed to a thermoplastic molding composition comprising an aromatic polycarbonate resin and a polyether ester amide random copolymer which composition is characterized by its improved impact performance.

EP 0 149 091 A1

Croydon Printing Company Ltd.

## Impact modified Polycarbonates

The present invention is directed to a thermoplastic molding composition comprising a blend of

(i)    about 80 % to 97 % by weight, referred to the sum of (1) + (ii) of an aromatic polycarbonate resin and of

(ii)   about 3 to 20 % by weight, referred to the sum of (i) + (ii), of a polyether ester amide random copolymer of

   (a)   at least one omega-aminocarboxylic acid or lactam having at least 10 carbon atoms,

   (b)   at least one polymeric diol having an average degree of polymerization of between 2 and 42 and

   (c)   at least one organic dicarboxylic acid,

said copolymer being further characterized in that said (a) relates by weight to the total of said (b) + said (c) as between 30 : 70 and 98 : 2, preferably between 50 : 50 and 95:5 and especially between 60 : 40 and 90 : 10, and further in that the hydroxy groups of said (b) and the carboxy groups of said (c) are present in equivalent amounts.

According to US Patent 3839245 polyether ester amides are known which are suitable as antistatic agents for

Mo-2535-EP/JP

polyester, polyamides and other fiber forming polymers. Thermoplastic polycarbonates are not involved.

According to US-Patent 4218549 polyether ester amides are useful as blending components for polyamides improving cold impact strength and flexibility.

According to US-Patent 4309518 poly(ethylene terephthalates) are modified with polyether ester amides thus improving the notched impact strength of the poly(alkylene terephthalates).

Nevertheless it was unobvious to use polyetherester amides for impact and critical thickness improving of thermoplastic aromatic polycarbonates because polycarbonate/polyamide-blends usually tend to decreased impact strength, caused by incompatability and degradation of the polycarbonate.

However, using polyetheresteramides as blendpartner for polycarbonate no decrease of 1/8" notched Izod impact strength and a strong increase of the 1/4" - Izod impact strength as well as critical thickness was observed.

Impact strength dependence on thickness gives rise to "critical thickness", a material parameter defined as that thickness at which a discontinuity occurs in the graphical representation of impact strength vs. specimen thickness. For example, polycarbonate based on bisphenol A, having a melt flow rate of 3 to 6 grams/10 minutes at 300°C (ASTM D-1238) exhibits a discontinuity at about 5.71 mm (225 mils).

Articles of this material thinner than 225 mils will show ductile failure upon impact while thicker ones will fail in a brittle fashion.

This dependence of impact performance on thickness represents a drawback because it tends to limit the utility of polycarbonates by imposing restrictions on the design of molded articles.

Among the approaches to solving the critical thickness problem the art discloses the incorporation of polyolefin into the polycarbonate resin (see U.S. Patent 3,437,631). Another approach, taught by U.S. Patent 4,043,980, entails the introduction of sulfur containing aromatic diols into the polycarbonate chains. The art is also noted   to include U.S. 4,299,928 where acrylated based graft elastomers useful in modifying the impact performance of polycarbonate resins are disclosed.

1.    The Polycarbonates

In the present context, polycarbonate resins are those having a molecular weight (weight average) of about 10,000 to about 200,000, preferably about 20,000 to about 80,000, and may be alternatively characterized as having a melt flow rate per ASTM D-128 at 300°C, of about 1 to about 24 gms/10 minutes, preferably about 2-6 gm/10 minutes.

Among the useful dihydroxy compounds for preparing the aromatic polycarbonates in the practice of the invention are hydroquinone, resorcinol, bis-(hydroxyphenyl)-alkanes, bis-(hydroxyphenyl)-cycloalkanes, bis-(hydroxyphenyl)-ethers, bis-(hydroxyphenyl)-ketones, bis-(hydroxyphenyl)-sulfoxides, bis-(hydroxyphenyl)-sulfones and alpha, alpha-bis-(hydroxyphenyl)-diisopropyl-benzenes. These and further suitable aromatic dihydroxy compounds are described, for example, in U.S. Patents 3,028,365; 2,999,835; 3,271,367; and 2,999,846, in German Offenlegungsschriften (German Published Specifications) 1,570,703, 2,063,050, 2,063,052, 2,211,956 and 2,211,957, in French Patent Specification 1,561,518 and in the monograph H. Schnell, Chemistry and Physics of Polycarbonates, Interscience Publishers, New York, 1964. Further examples of suitable bisphenols are 2,2-bis-(4-hydroxyphenyl)-propane (bisphenol A), 2,2-bis-(4-hydroxyphenyl)-2-methyl-butane, 1,1-bis-(4-hydroxyphenyl)-cyclohexane, alpha, alpha-bis-(4-hydroxyphenyl)-p-diisopropyl-benzene, 2,2-bis-(3-chloro-4-hydroxyphenyl)-propane, hydroxybenzophenone and 4,4'-sulfonyl diphenol.

The most preferred bisphenol is 2,2-bis-(4-hydroxyphenyl)-propane (bisphenol A).

The polycarbonates of the invention may entail in their structure, units derived from one or more of the suitable bisphenols.

The preparation of polycarbonate resins may be carried out in accordance with any of the processes known in the art, for example, by the interfacial polycondensation process, polycondensation in a homogeneous phase or by transesterification. The suitable processes and the assotiated reactants, catalysts, solvents and conditions are known in the art.

In the preparation of the polycarbonate resins
of the invention, monofunctional reactants such as
monophenols are advantageously used in order to limit
their respective molecular weights. Also branching
agents may optionally be employed. Branching may be
obtained by the incorporation of small amounts, preferably of between about 0.05 and 2.0 mol % (relative
to diphenols employed), of trifunctional of more than
trifunctional compounds, for example compounds having
three or more phenolic hydroxyl groups. Polycarbonates
of this type are known in the art.

Some examples of compounds with three or more
than three phenolic hydroxy groups which can be used
are phloroglucinol, 1,4,5-tri-(4-hydroxyphenyl)-benzene, 1,1,1-tri-(4-hydroxyphenyl)-ethane, tri-(4-
hydroxyphenyl)-phenylmethane, 2,2-bis/4,4-bis-(4-
hydroxyphenyl)-cyclohexy1/-propane, 2-(4-hydroxy-
phenyl)-2-(2,4-dihydroxyphenyl)-propane, tetra-
(4-hydroxyphenyl)-methane, tetra-(4-(4-hydroxy-
phenylisopropyl)-phenoxy)-methane and 1,4-bis-
(4,4"-dihydroxytriphenyl)-methyl)-benzene. Some
of the other trifunctional compounds are 2,4-dihydroxybenzoic acid, trimesic acid, cyanuric chloride and
3,3-bis(4-hydroxy-3-methyl-phenyl)-2-oxo-2,3-dihydro-
indole.

2.  The Polyether Ester Amides

The polyether ester amides useful in accordance
with the invention are random copolymers fully described in U.S. Patent 4,207,410 which disclosure is incorporated herein by reference. Briefly, these thermoplastic polyether ester amides are characterized in having units of the starting components which are randomly distributed in the polymer chain. The method for producing the thermoplastic polyether ester amides as taught in U.S. 4,207,410 comprises heating a mixture of

I.    one or more polyamide forming compounds from the group of the omega-aminocarboxylic acids and lactams with at least 10 carbon atoms;

II.    a polymeric diol having an average degree of polymerization of between about 2 and 42 or a molecular weight of between about 160 and 3,000; and

III.  at least one organic dicarboxylic acid in a weight ratio of I to (II + III) of between 30:70 and 98:2. The II and III components have hydroxy and carboxy groups present in equivalent amounts. The heating is carried out in the presence of about 2-30% by weight of water, based on the polyamide forming compounds of component I, under the internal pressure attained in a closed container at temperatures of between 230°C and 300°C. Water is removed as steam and after removal of the water the product is further treated at 250°-280°C, with the exclusion of oxygen under normal pressure or under reduced pressure.

The polyamide-forming components of component I utilized are omega-aminocarboxylic acids and/or lactams of at least 10 carbon atoms, especially lauryl lactam and/or omega aminododecanoic acid or omega-aminoundecanoic acid.

The diol component II is selected from the group consisting of alpha, omega-dihydroxy(polytertra-hydrofuran) polybutylene glycol, polypropylene glycol and polyethylene glycol having an average molecular weight of between about 160 and 3,000, preferably between about 300 and 2,200, especially between about 500 and 1,200, corresponding to an average degree of polymerization of between 2 and 42, preferably between about 4 and 30, especially between about 7 and 17. The preferred diol is alpha-omega dihydroxy(polytetrahydrofuran).

Suitable dicarboxylic acids of component III are aliphatic dicarboxylic acids of the general formula $HOO-C-(CH_2)_x-COOH$, wherein x can have a value of between 4 and 11. Examples of the general formula are adipic acid, pimelic acid, suberic acid, azelaic acid, sebacic acid, and decanedicarboxylic acid. Furthermore, useable are cycloaliphatic and/or aromatic dicarboxylic acids of at least eight carbon atoms, e.g., hexahydroterephthalic acid, terephthalic acid, isophthalic acid, phthalic acid, or naphthalene-dicarboxylic acids.

Components I, II and III are used in quantitative ratios wherein the weight ratio of I:(II + III) is between 30:70 and 98:2, preferably between 50:50 and 95:5, especially between 60:40 and 90:10. This corresponds approximately to a molar ratio of between 26.2:73.8 and 99.75:0.25, preferably between 54.2:45.8 and 99.1:0.9, especially 71.2:28.3 and 97.2:2.8.

Suitable polyether ester amides are available commercially from Huels Corporation, 750 3rd Avenue, New York, NY under the tradenames Nylon 12-Huels.

The incorporation of any of fire retardants, mold release agents, UV stabilizers and other modifiers as well as fillers and/or reinforcements known in the polycarbonate art may be effected in the composition of the invention.

The incorporation of the components of the composition in accordance with the invention may be carried out by any of the means known in the art such as by extrusion blending.

## EXAMPLES

Compositions in accordance with the invention were prepared and their properties determined as summarized in the Table below. The compositions comprising polycarbonate resin and a polyether ester amide were prepared by extrusion blending of the components using a 2" vented extruder (screw 2.75:1) at a temperature profile (r ⟶ f) corresponding to 280/300/300/290/290°C and with a screen pack (20:40:60:20). The extruded strands were pelletized and the pellets were used in molding test specimens by injection. (Injection melt temperature about 288°C).

a) The polycarbonate used in the preparation of the compositions described below was a bisphenol A based homopolycarbonate resin characterized generally by its melt flow rate of about 6-11.9 gm/10 min. (determined
per ASTM D-1238).

b)   The polyether ester amide (termed elastomer herein) used in the preparation of the compositions described
below had been obtained as follows:

100 parts by weight of lauryllactam; 28.6 parts by
weight of alpha, omega-dihydroxy-(polytetrahydrofu-
ran) having an average molecular mass of 1000; 4.75
parts by weight of terephthalic acid; 0.04 part by weight
of triethylamine as the catalyst in 4.5 parts by weight
of water were heated for 8 hours in a stirred autoclave
to 270°C, thus attaining an internal pressure of about
19 bar. The reaction mixture was subjected to expansion
for one hour, and nitrogen was passed over the mixture
for 7 hours. In the last 30 minutes, 1,33 parts by weight
of N,N'-hexamethylene-bis-(3,5-di-tert.butyl-4-hydroxyhydrocinnamic     acid amide) was stirred into the
melt as a stabilizer. The batch was then discharged
and granulated. The granules were dried to a residual
moisture content of less than 0.05 %.

| Softening temperature | 160°C |
| ETA rel | 1,85 |
| Glass transition temperature about | -15°C |
| - 40°C | 500 |
| Shear modulus | |
| $\underline{/}\overline{N} \cdot mm^{-2}\underline{/}$ | |
| + 20°C | 200 |
| Cold impact strength test according to SAE J 844c at -40°C | no rupture |

An assessment of the properties of the compositions of the invention may take account of the properties of the unmodified pure polycarbonate resin among which properties the notched Izod impact strength for 1/4" specimens is noted to be 2.2 ft. lb/in.

| Compositions | A [3] | B [3] | C | D | E | F [3] |
|---|---|---|---|---|---|---|
| Elastomer, phr [1] | 1.0 | 3.0 | 5.0 | 7.0 | 10.0 | 33.3 |
| Melt flow at 300°C, gm/10 min. | 8.9 | 11.0 | 12.0 | 11.8 | 11.9 | 4.9 |
| Impact properties | | | | | | |
| 1/8" Notched Izod ft. lb/in | 15.85 | 15.00 | 15.00 | 15.09 | 14.98 | 11.36 |
| 1/8" Unnotched Izod | N.B. [2] | NB | N.B. | N.B. | N.B. | N.B. |
| 1/4" Notched Izod, ft. lb/in. | 2.02 | 3.26 | 4.66 | 11.31 | 11.28 | 9.38 |
| Critical thickness, mils | 165 | 195 | 235 | > 256 | > 257 | > 255 |
| Tensile properties, Mpa | | | | | | |
|     yield | 62.7 | 61.3 | 59.2 | 57.6 | 55.1 | 45.6 |
|     ultimate | 62.7 | 61.3 | 59.2 | 57.6 | 56.3 | 52.7 |
|     failure | 49.5 | 48.5 | 48.6 | 49.1 | 52.0 | 52.7 |
| Elongation, % | | | | | | |
|     yield | 5-6 | 5-6 | 6-7 | 5-7 | 5-6 | 5 |
|     failure | 15-55 | 31-65 | 70-80 | 60-100 | 27-115 | 130-137 |

(1) phr - per hundred weight of polycarbonate resin.

(2) N.B. - no break.

(3) Comparison Examples

0149091

- 12 -

What is claimed is:

1.   A thermoplastic molding composition comprising a blend of

(i)   about 80 % to 97 % by weight, referred to the sum of (i) + (ii) of an aromatic polycarbonate, and of

(ii)   about 3 % to 20 % by weight, referred to the sum of (i) + (ii), of a polyether ester amide random copolymer of

   (a)   at least one omega-aminocarboxylic acid or lactam having at least 10 carbon atoms,

   (b)   at least one polymeric diol having an average degree of polymerization of between 2 and 42 and

   (c)   at least one organic dicarboxylic acid,

   said copolymer being further characterized in that said (a) relates by weight to the total of said (b) + (c) as between 30 : 70 and 98:2, and further in that the hydroxy groups of said (b) and the carboxy groups of said (c) are present in equivalent amounts.

2.   The composition of Claim 1 wherein said (a) is at least one member selected from the group consisting of lauryllactam, omega-aminododecanoic acid and omega-aminoundecanoic acid.

3. The composition of Claim 1 hwerein said (b) has
an average degree of polymerization of between about
4 and 30.

4. The composition of Claim 1 wherein said (c) is
selected from the group consisting of aliphatic dicarboxylic acids of the general formula $HOO-C-(CH_2)_x-COOH$ wherein x is between 4 and 11.

5. The composition of Claim 1 or 2 wherein said polycarbonate is a homopolymer based on bisphenol A.

6. The thermoplastic molding composition of Claim 1
wherein said (b) is selected from the group consisting
of alpha-omega-dihydroxy(polytetrahydrofuran), polybutylene glycol, polypropylene glycol, and polyethylene
glycol.

7. The thermoplastic molding composition of Claim 6,
wherein said polymeric diol is alpha-omega-dihydroxy-
(polytetra-hydrofuran).

Mo-2535

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 105 712 (D. MARGOTTE et al.) <br> * Column 2, line 59 - column 3, line 7; claims 1-4 * | 1 | C 08 L 69/00 |
| A | EP-A-0 023 248 (CHEMISCHE WERKE HÜLS) <br> * Claims 1,2 * & US-A-4 309 518 (Cat. D) | 1-4,6, 7 | |

TECHNICAL FIELDS SEARCHED (Int. Cl.4)

C 08 L 69/00
C 08 L 77/00
C 08 L 77/02

The present search report has been drawn up for all claims

| Place of search | Date of completion of the search | Examiner |
|---|---|---|
| BERLIN | 05-03-1985 | BOURGONJE A.F. |